# EUROPEAN PATENT SPECIFICATION

(11) **EP 2 054 296 B1**
(45) Date of publication and mention of the grant of the patent: **01.12.2010**
(21) Application number: 07801795.1
(22) Date of filing: 21.08.2007
(51) Int. Cl.: B64C 1/12, B64C 1/40, B64D 11/00

(54) **FRAME ELEMENT, AIRCRAFT COMPONENT ASSEMBLY SYSTEM AND METHOD OF FITTING A COMPONENT IN AN AIRCRAFT**
RAHMENELEMENT, MONTAGESYSTEM FÜR FLUGZEUGKOMPONENTEN UND VERFAHREN FÜR DEN EINBAU EINER KOMPONENTE IN EIN FLUGZEUG
ÉLÉMENT DE CHÂSSIS, SYSTÈME D'ASSEMBLAGE DE COMPOSANTS D'AÉRONEF ET PROCÉDÉ DE MONTAGE D'UN COMPOSANT DANS UN AÉRONEF

(30) Priority: 22.08.2006 DE 102006039290; 28.09.2006 US 827355 P
(43) Date of publication of application: 06.05.2009
(73) Proprietor: Airbus Deutschland GmbH, 21129 Hamburg (DE)
(72) Inventor: KÖFINGER, Christian, A-6330 Kufstein (AT); METZGER, Joachim, 89614 Öpfingen (DE); AUBURGER, Michael, 88416 Erlenmoos (DE)
(74) Representative: Schicker, Silvia
(86) International application number: PCT/EP2007/007362
(87) International publication number: WO 2008/022773

(56) References cited:
- EP-A- 1 468 907
- US-A- 4 050 208
- US-A- 5 810 178
- US-A- 6 158 690
- US-B1- 6 536 710

## Description

The invention relates to an arrangement comprising a frame element for use in an aircraft component assembly system and to a method of fitting a component, in particular an interior component or an insulation pack in an aircraft.

When fitting interior components in an aircraft the current practice is to connect the various components, such as e.g. dado panels, side trims, light strips and the like, individually to the aircraft structure. As each component has to be separately positioned and fastened to the aircraft structure, the fitting of interior components is often very time-consuming. Furthermore, changes to the position of individual interior components or design changes to the interior components are often achievable only with great difficulty because such changes as a rule involve adapting a holder on the aircraft structure side and/or at least adapting the fastening points provided on the aircraft structure for fitting the interior components.

Whereas the primary insulation is attached directly to the inside of the aircraft outer skin, insulation packs that form the secondary insulation of the aircraft are conventionally glued onto the interior components before these components are fastened to the aircraft structure. In order to reproduce the contour of the interior components, which is often of a curved design and provided with shoulders and the like, a plurality of differently shaped insulating packs are often required. The fitting of the secondary insulation is therefore time-consuming and cost-intensive.

US 6,536,710 B1 discloses a lattice support structure which carries a plurality of aircraft interior components such as overhead stowage bins, crew rest modules, ducts, electrical equipment and wiring. The lattice support structure is attached to an aircraft fuselage body section.

US 6,158,690 describes a cabin interior assembly which is mounted internally from a main airframe structure. The cabin interior assembly includes a shell structure and a plurality of panels. The shell structure is formed by a plurality of partial hoop or bell frames interconnected by longitudinal support members.

The object underlying the invention is to provide an arrangement comprising a frame element for use in an aircraft component assembly system and a method of fitting at least one component, in particular an interior component or an insulation pack in an aircraft, which allow easy and rapid fitting of the component in the aircraft.

This problem is solved by an arrangement according to claim 1 and a method of fitting a component in an aircraft according to claim 10.

A frame element for use in an aircraft component assembly system is attached to an aircraft structure and comprises at least one fastening device for fastening at least one aircraft interior component or at least one insulation pack to the frame element.

The frame element is preferably adapted so as to be screw-fastened to the aircraft structure. For example, a fastening of the frame element to the aircraft structure by means of four screw connections is possible. For this purpose, there may be corresponding bores optionally provided with a thread in the aircraft structure and/or in the frame element.

To allow particularly easy fitting of the frame element to the aircraft structure, the frame element may also be adapted so as to be fastened at one end by a plug-in connection and at another end by a screw- or detent connection to the aircraft structure. A frame element of such a design would also be particularly easy to detach from the aircraft structure. Extremely easy assembly is achieved when a component of the frame element or the aircraft structure that is used to establish the plug-in connection is of an articulated design.

The frame element is preferably made of a lightweight, rigid material, such as for example aluminium, an aluminium alloy, GFRP, CFRP or some other carbon fibre material.

If the frame element is used to connect an interior component to the aircraft structure, the interior component may first be fastened to the frame element, i.e. the frame element and the interior component may be preassembled into an assembly group that may be handled independently. If required, it is naturally also possible to attach a plurality of interior components to the frame element. Then the preassembled assembly group consisting of the frame element and the interior component(s) fastened thereto may be connected easily and rapidly to the aircraft structure.

A particular advantage of the frame element is that it may be used as a carrier element for different interior components, i.e. interior components of differing shape and size. As a result, the number and arrangement of the fastening points provided on the aircraft structure for the interior components need be adapted no longer to different interior components but merely to a frame element carrying different interior components. The frame element therefore allows an uncoupling of the fastening points provided on the interior components from the fastening points provided on the aircraft structure. Consequently, the number of fastening points provided for the interior components on the aircraft structure may be considerably reduced through the use of the frame element. It is moreover possible to standardize the arrangement of the fastening points for the interior components on the aircraft structure.

Since through the use of the frame element it is possible to dispense with an adjustment of the interior-component and the aircraft-structure fastening points, greater flexibility in the design of both the interior components and the aircraft structure is achieved. This greater flexibility may be utilized to optimize the weight of the interior components and/or of the aircraft structure.

If the frame element is used to connect an insulation pack forming for example part of the secondary insulation of the aircraft to the aircraft structure, the insulation pack may likewise first be fastened to the frame element, i.e. the frame element and the insulation pack may be preassembled into an assembly group that may be handled independently. If required, it is naturally also possible to attach a plurality of insulation packs to the frame element. Then the preassembled assembly group comprising the frame element and the insulation pack(s) fastened thereto may be connected easily and rapidly to the aircraft structure.

Through the use of the frame element for fitting the insulation packs that form for example the secondary insulation of the aircraft it is possible to dispense with the laborious glueing of the insulation packs onto the interior components. In particular, compared to most aircraft interior components the frame element has a contour of a much simpler shape with no shoulders or the like, so that fewer separately designed insulation packs have to be installed. This allows a considerable cost saving.

As a fastening device for fastening an interior component to the frame element, there may be provided on the frame element a mounting, a clamp or a detent device, which may also be designed integral with the frame element. It is however alternatively also possible to fasten the interior component by means of screws or rivets to the frame element, in which case in the interior component and/or in the frame element there may be corresponding bores optionally provided with a thread.

A fastening device for fastening an insulation pack to the frame element is preferably adapted to fasten the insulation pack in a mechanically detachable manner to the frame element.

For example, the fastening device may be designed in the form of a Velcro fastener, a hook-and-loop strip, a mushroom-head strip or a fir-tree fastening device. An alternative possibility is also to fasten the insulation pack to the frame element with the aid of screws, rivets, clips, clamping devices, magnetic holders, press fasteners with springs, an expanding fastening device or a ball fastening device. It is further conceivable to suspend the insulation pack at fastening points provided on the frame element, or to make the insulation pack slightly larger than the frame element in order to be able to fold the insulation pack over the frame element and to fasten it by means of a rubber band to the frame element. Finally, the device for fastening the frame element to the aircraft structure may also be designed such that it simultaneously allows a fastening of the insulation pack to the frame element.

The frame element comprises two longitudinal struts disposed at least in sections substantially parallel to one another as well as at least one connecting strut extending between the longitudinal struts. The length of the longitudinal struts may be varied according to requirements. This means that the geometry of the frame element may also be varied in a desired manner. For example, the frame element may extend from a plane forming the floor of an aircraft cabin to a centre line of the aircraft cabin roof. Alternatively, a frame element is also conceivable that extends from one side of the plane forming the floor of an aircraft cabin to the opposite side of the plane forming the floor of an aircraft cabin, i.e. that spans both sides of the aircraft cabin as well as the aircraft cabin roof.

In dependence upon the length of the longitudinal struts, the frame element may comprise a corresponding number of connecting struts in order to guarantee an adequate rigidity of the frame element. In the fitted state of the frame element, the longitudinal struts of the frame element may extend parallel to ribs of the aircraft structure. The longitudinal struts therefore preferably have at least in sections a curvature that is adapted to a curvature of the ribs of the aircraft structure.

For example, the frame element may be so dimensioned that the longitudinal struts in the fitted state of the frame element extend parallel to adjacent ribs of the aircraft structure. Alternatively, however, the frame element may be of such a size that the distance between the longitudinal struts of the frame element is greater than the distance between two adjacent ribs of the aircraft structure. The connecting strut of the frame element is provided with at least one recess, which after the attachment of the frame element to the aircraft structure interacts in such a way with a rib of the aircraft structure that the rib is received in the recess provided in the connecting strut. This is a simple way of preventing the rib, which in the fitted state of the frame element is disposed between the longitudinal struts of the frame element, from impeding the fastening of the frame element to the aircraft structure. If the frame element comprises a plurality of connecting struts, each connecting strut is preferably provided with at least one recess, which in the fitted state of the frame element receives a rib of the aircraft structure. In a particularly preferred embodiment of the frame element, all of the connecting struts have two recesses for receiving two adjacent ribs.

On the frame element at least one force introduction apparatus of e.g. a shackle-shaped design is preferably formed for attaching the frame element to the aircraft structure, For example, on each longitudinal strut of the frame element at least one force introduction apparatus may be provided, through which a screw or a bolt may be passed for easy and secure connection of the frame element to the aircraft structure. In dependence upon the size of the frame element and/or the length of the longitudinal struts of the frame element, a plurality of force introduction apparatuses may be disposed distributed along the length of the longitudinal struts of the frame element in order to guarantee a secure fastening of the frame element to the aircraft structure.

In a preferred embodiment of the invention, the frame element is attached to the aircraft structure via shock mounts. By shock mounts in the present context are meant bearing arrangements made of a vibration-damping material, for example a rubber-elastic material, which ensure a shock-free fastening of the frame element, and hence of the interior component attached to the frame element, to the aircraft structure. Fastening the frame element via shock mounts leads to an acoustic uncoupling of the frame element from the aircraft structure. The shock mounts may be positioned for example between the force introduction apparatuses formed on the frame element and the components of the aircraft structure, such as for example the ribs, that are provided for fastening the frame element. It is however possible for all of the previously described fastening devices for fastening the frame element to the aircraft structure to be equipped with corresponding shock mounts for the acoustic uncoupling of the frame element from the aircraft structure.

In the shock mounts suitable through-openings are preferably provided, which allow a screw or bolt to be passed through the shock mounts in order to fasten the frame element to the aircraft structure. Alternatively, suitable elastic bushes may be provided in the shock mounts for connecting the shock mounts to the frame element.

The frame element preferably comprises a fastening module, on which the at least one fastening device for fastening at least one aircraft interior component is formed or disposed. As already mentioned, the interior component may be fastened by means of a mounting, a clamp or a detent device, but also by a screw- or rivet fastening to the frame element. The mounting, clamp or detent device may be either fitted on the fastening module or designed integral with the fastening module. If the interior component is to be screw-fastened or riveted to the frame element, there may be corresponding bores optionally provided with a thread in the fastening module.

The fastening module, which is designed integral with the frame element but may alternatively also be connected detachably to the frame element, is, in terms of its shape and size as well as in particular in terms of the shape and arrangement of the fastening device, adapted to the interior component that is to be attached to the frame element. Thus, in order to be able to use the frame element to fasten different interior components to the aircraft structure, the frame element merely has be provided with different fastening modules that are adapted to the different interior components. It is therefore possible for example also to fasten smaller interior components to the frame element, with the result that the frame element according to the invention is extremely versatile.

According to a particularly preferred embodiment of the invention, the frame element further comprises a further fastening device for fastening an insulation pack or an interior component to the frame element. In other words, the frame element is designed in such a way that it may be preassembled with at least one interior component and with at least one insulation pack forming for example part of the aircraft secondary insulation into an assembly group that may be handled independently. This assembly group may then easily be attached in the manner described above to the aircraft structure. The frame element in this case is preferably so designed that the interior component fastened to the frame element, in the fitted state of the assembly group consisting of the frame element, the interior component and the insulation pack, is disposed at a side of the frame element facing away from the aircraft structure. The insulation pack, on the other hand, in the fitted state of the assembly group may either be disposed between the frame element and the aircraft structure at a side of the frame element facing the aircraft structure or it may be fastened between the at least one interior component and the frame element at the side of the frame element facing away from the aircraft structure.

If the frame element is intended to be connected to an interior component and an insulation pack to form an assembly group, the previously described fastening devices may be used as fastening devices for the interior component and the insulation pack. In particular, the interior component may be fastened to the frame element by means of a mounting, clamp or detent device that is optionally fitted or formed on a fastening module, and the insulation pack may be fastened to the frame element by means of a mechanically detachable fastening device, such as e.g. a Velcro fastener or an adhesive tape.

An aircraft component assembly system may comprise a plurality of the previously described frame elements. Preferably, between adjacent frame elements of the aircraft component assembly system a gap cover is provided.

A method according to the invention of fitting a component in an aircraft comprises the steps of providing a previously described frame element, fastening at least one interior component or at least one insulation pack to the frame element and attaching the frame element having the at least one interior component or the at least one insulation pack fastened thereto to an aircraft structure.

The at least one interior component may be fastened to the frame element by means of a fastening device designed in the form of a mounting, a clamp or a detent device. Preferably, the interior component is fastened to the frame element by means of a fastening device that is formed or disposed on a fastening module provided on the frame element. The at least one insulation pack, on the other hand, is preferably fastened to the frame element by means of a fastening device that is adapted to fasten the insulation pack in a mechanically detachable manner to the frame element.

The frame element having the at least one interior component fastened thereto or having the at least one insulation pack fastened in a mechanically detachable manner thereto is attached in such a way to the aircraft structure that a recess provided in a connecting strut of the frame element receives a rib of the aircraft structure. An insulation pack optionally disposed between the frame element and the aircraft structure is in this case possibly compressed in the region of the contact area of the insulation pack with the rib. The insulation material is however sufficiently elastic for this not to lead to damage of the insulation pack. Optionally, the insulation pack may also be provided with corresponding recesses for receiving the rib or some other component of the aircraft structure.

The frame element having the interior component or the insulation pack fastened thereto is preferably attached to the aircraft structure by means of a force introduction apparatus formed on the frame element, wherein such a force introduction apparatus is preferably provided on each longitudinal strut of the frame element.

The frame element having the at least one interior component or the at least one insulation pack fastened thereto may be attached to the aircraft structure via shock mounts.

Finally, the method according to the invention may provide that prior to attaching the frame element to the aircraft structure both at least one interior component and at least one insulation pack are fastened to the frame element.

There now follows a detailed description of a preferred embodiment of the invention with reference to the accompanying diagrammatic drawings, wherein
- Figure 1: shows a first embodiment of a frame element,
- Figure 2: shows a detail view of a force introduction apparatus disposed on a longitudinal strut of the frame element represented in Figure 1,
- Figure 3: shows the first embodiment of the frame element having interior components fastened thereto, in the fitted state,
- Figure 4: shows an aircraft component assembly system comprising two frame elements,
- Figure 5: shows the first embodiment of the frame element with a fastening module for fastening an interior component to the frame element,
- Figure 6: shows the first embodiment of the frame element having an insula- tion pack fastened thereto,
- Figure 7: shows a second embodiment of a frame element,
- Figure 8: shows a first embodiment of a fastening device for fastening the insulation pack to the frame element,
- Figure 9: shows a second embodiment of a fastening device for fastening the insulation pack to the frame element,
- Figure 10: shows a third embodiment of a fastening device for fastening the insulation pack to the frame element.

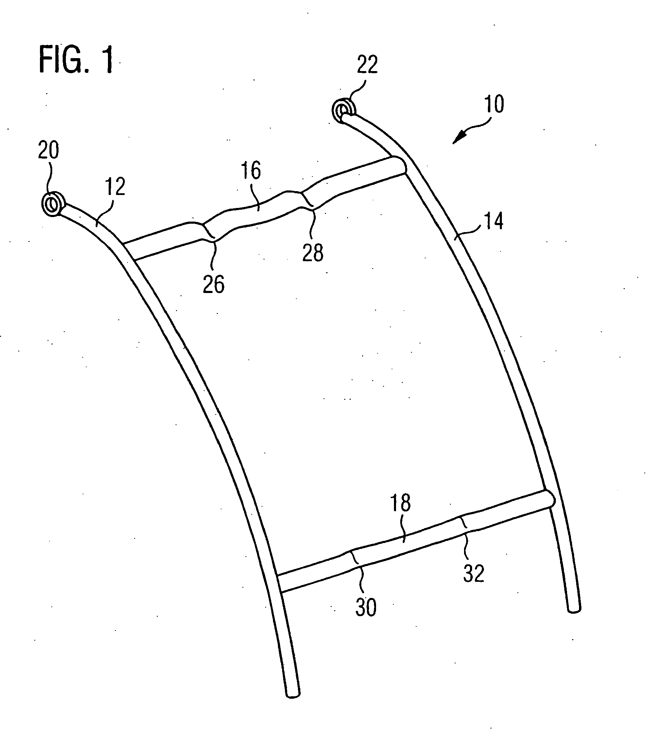

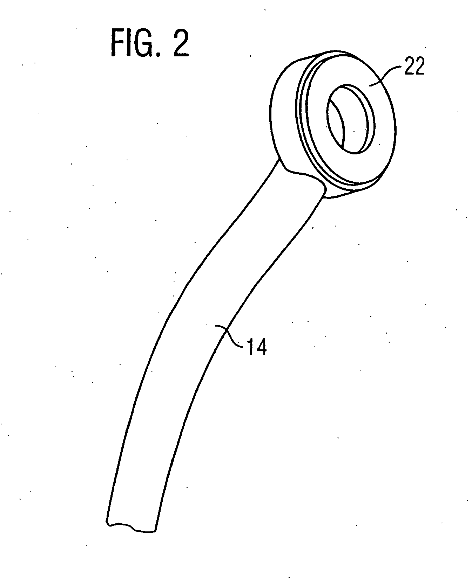

Figure 1 shows a first embodiment of a frame element 10 made of aluminium, which comprises two curved longitudinal struts 12, 14 disposed parallel to one another as well as two connecting struts 16, 18 extending parallel to one another between the longitudinal struts 12, 14. On a first end of each longitudinal strut 12, 14 of the frame element 10 there is formed a shackle-shaped force introduction apparatus 20, 22, which is represented in an enlarged detail view in Figure 2. Each connecting strut 16, 18 of the frame element 10 is provided with two recesses 26, 28, 30, 32.

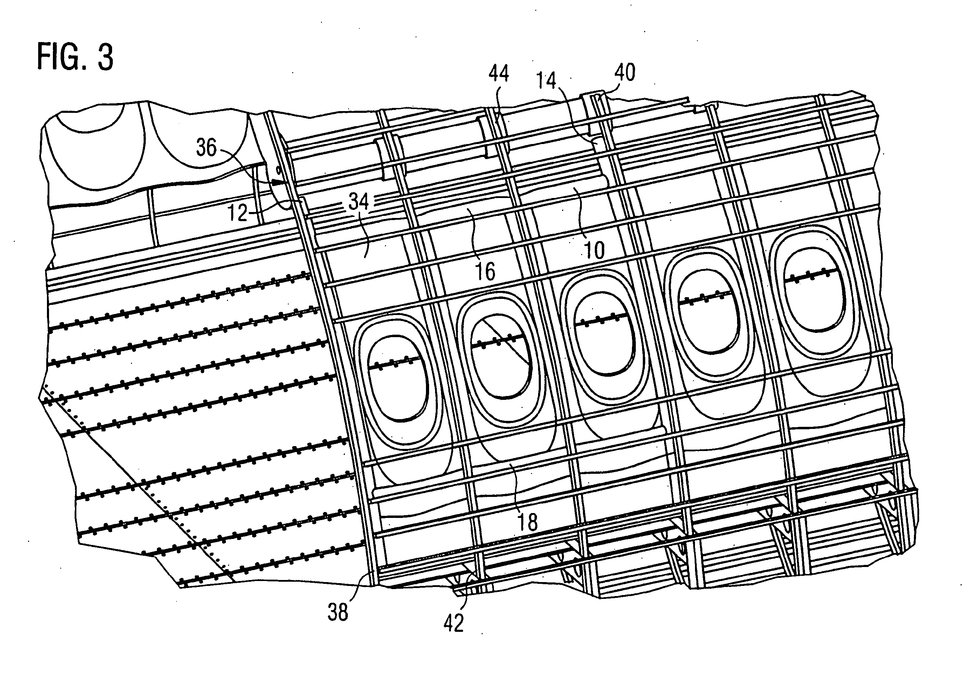

The frame element 10 comprises a fastening device, which is not shown in the drawings and is used to fasten an aircraft interior component 34, which may be seen in Figure 3, to the frame element 10. As a fastening device for fastening the interior component 34 to the frame element 10 a mounting, a clamp or a detent device may be used. It is however alternatively also possible to fasten the interior component 34 to the frame element 10 by means of screws or rivets, in which case in the interior component 34 and/or in the frame element 10 there are corresponding bores optionally provided with a thread. In the embodiment shown in Figure 3, the interior component 34 fastened to the frame element 10 is a side trim panel. It is however also possible to attach other aircraft interior components, such as e.g. dado panels, ceiling trim panels, doorframe components, light strips etc., to the frame element 10.

By means of the force introduction apparatuses 20, 22 formed on the longitudinal struts 12, 14 of the frame element 10, the frame element 10 may be fastened to an aircraft structure 36 at a side of the aircraft structure 36 facing the interior of an aircraft. For this purpose, a screw is passed through each of the force introduction apparatuses 20, 22 formed on the longitudinal struts 12, 14 of the frame element 10 and is screwed into a bore, which is provided with a thread and formed in a rib 38, 40 of the aircraft structure 36. If a particularly secure fastening of the frame element 10 to the aircraft structure 36 is required, an additional fastening system may be provided.

The fastening of the frame element 10 to the aircraft structure 36 is effected via shock mounts (not shown in Figure 3), i.e. bearing arrangements made of a vibration-damping material that ensure a shock-free fastening of the frame element 10 to the aircraft structure 36. The shock mounts made of a rubber-elastic material are each provided with a through-opening, through which may be passed the screws that are used to fasten the assembly group consisting of the frame element 10 and the interior component 34 to the aircraft structure 36. By means of the shock mounts an acoustic uncoupling of the frame element 10 and hence of the interior component 34 from the aircraft structure 36 may be achieved.

As may be seen in Figure 3, the curvature of the longitudinal struts 12, 14 of the frame element 10 is adapted in sections to a curvature of the ribs 38, 40 of the aircraft structure 36 so that the longitudinal struts 12, 14 of the frame element 10 in the fitted state of the frame element 10 extend in sections substantially parallel to the ribs 38, 40. Ribs 42, 44 lying between the ribs 38, 40 of the aircraft structure 36 are received in the recesses 26, 28, 30, 32 provided on the connecting struts 16, 18 of the frame element 10, thereby preventing the ribs 42, 44 from impeding the fastening of the frame element 10 to the aircraft structure 36.

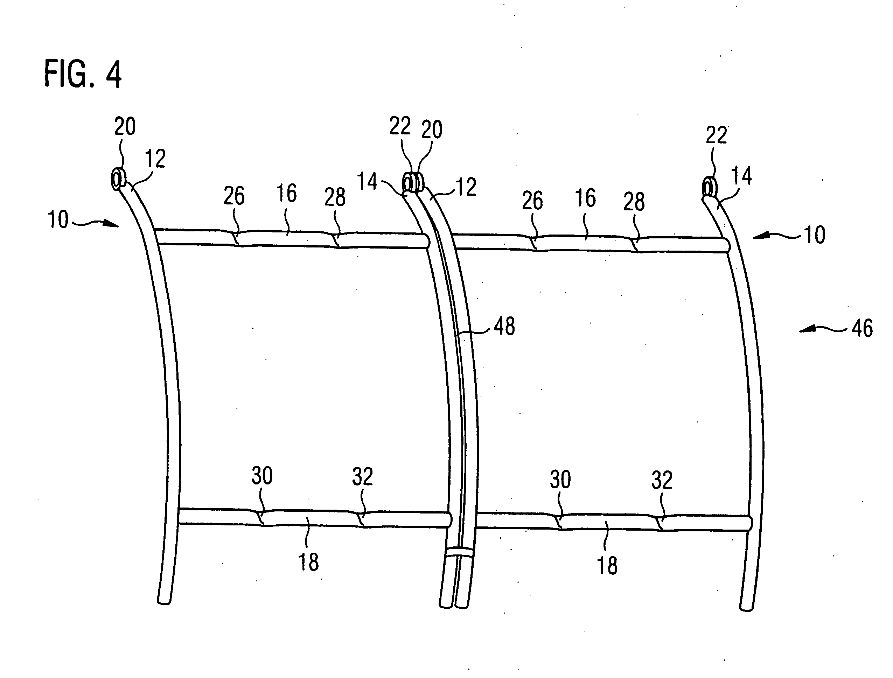

A plurality of frame elements 10 form an aircraft component assembly system 46. An aircraft component assembly system 46 comprising two frame elements 10 is shown in Figure 4. Between adjacent frame elements 10 of the aircraft component assembly system 46 there is a gap cover 48.

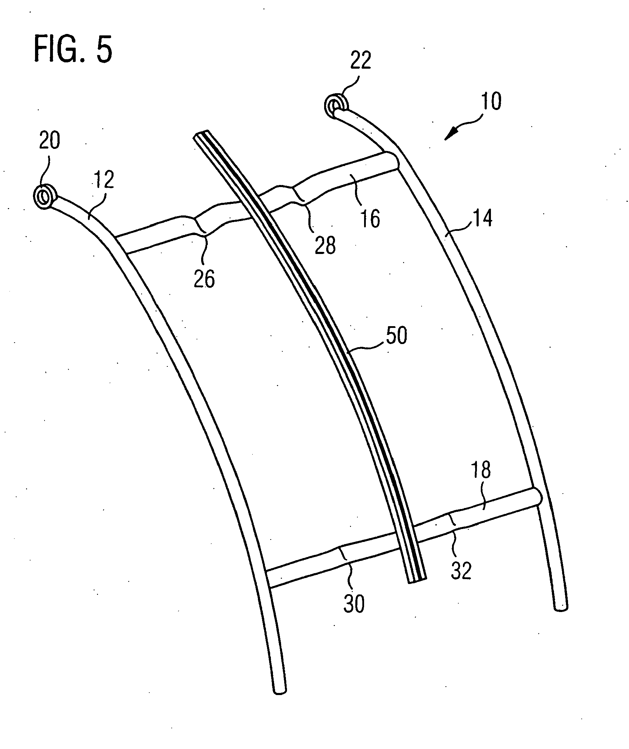

Figure 5 shows a frame element 10, which comprises a fastening module 50 designed in the form of a curved strut that is attached to the frame element 10. Formed on the fastening module 50 is a fastening device, which is not shown in Figure 5, for fastening an aircraft interior component to the fastening module 50 and hence to the frame element 10. As described in connection with Figures 1 and 3, the fastening device may take the form of a mounting, a clamp or a detent device. Alternatively, the interior component may however be connected by a screw- or rivet fastening to the fastening module 50 and hence to the frame element 10.

The fastening module 50 is, in terms of its shape and size as well as in terms of the shape and arrangement of the fastening device provided on the fastening module 50, adapted to the interior component that is to be attached to the frame element 10. Furthermore, the curvature of the fastening module 50 is adapted to a curvature of ribs of an aircraft structure, thereby allowing the frame element 10 to be fastened without difficulty to the aircraft structure at a side of the aircraft structure facing an interior of an aircraft.

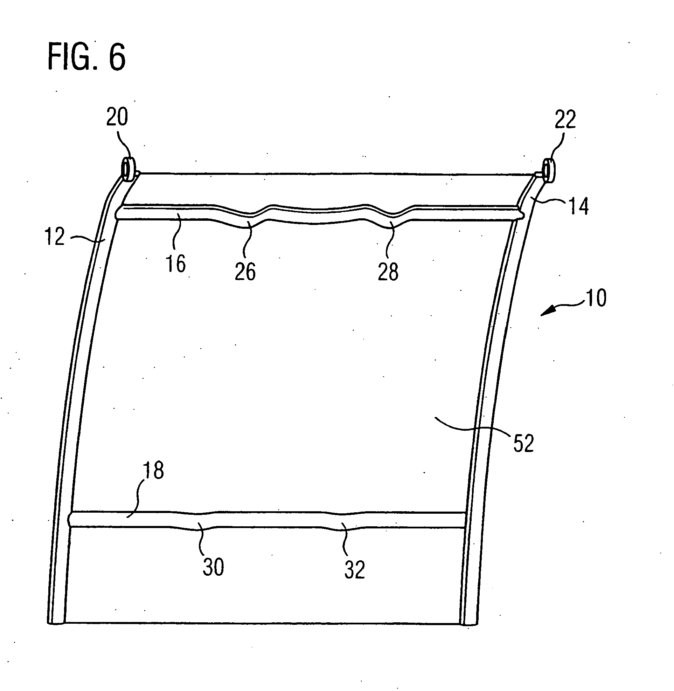

A frame element 10 shown in Figure 6 has, in addition to the fastening device for fastening an aircraft interior component, a further fastening device (not shown in Figure 6) for the mechanically detachable fastening of an insulation pack 52, which forms part of an aircraft secondary insulation, to the frame element 10. The frame element 10, the fastening device for fastening an aircraft interior component and the further fastening device for fastening the insulation pack 52 are designed and disposed in such a way that the interior component may be fastened at a first side of the frame element 10 facing an interior of an aircraft in the fitted state of the frame element 10, while the insulation pack 52 may be attached at a second side of the frame element 10 facing away from the interior of the aircraft in the fitted state of the frame element 10.

In the fitted state of an assembly group consisting of the frame element 10, the interior component and the insulation pack 52, the insulation pack 52 is disposed between the frame element 10 and an aircraft structure, with the result that the insulation pack 52 is possibly compressed in the region of the contact area of the insulation pack 52 with a rib or some other component of the aircraft structure. The material of the insulation pack 52 is however sufficiently elastic for this not to lead to damage of the insulation pack 52. Alternatively, the insulation pack 52 may also be provided with corresponding recesses for receiving a rib or some other component of the aircraft structure.

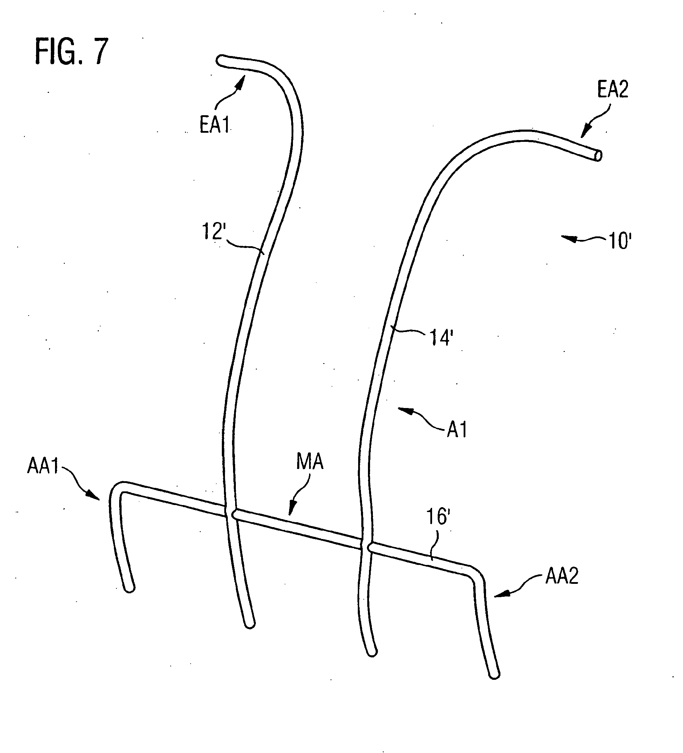

Figure 7 shows a second embodiment of a frame element 10' made of aluminium. The frame element 10' comprises two longitudinal struts 12', 14', which in a first portion A1 extend substantially parallel to one another. In a similar manner to the frame element 10 shown in Figures 1 to 6, a curvature of the longitudinal struts 12', 14' in the first portion A1 is adapted to the curvature of the ribs of the aircraft structure. In contrast to the frame element 10 shown in Figures 1 to 6, however, the longitudinal struts 12', 14' of the frame element 10' according to Figure 7 have end portions EA1, EA2 that are each curved outwards through an angle of ca. 90°, with the result that each longitudinal strut 12', 14' is of a substantially L-shaped design.

The frame element 10' further comprises a connecting strut 16'. A middle portion MA of the connecting strut 16' extends between the longitudinal struts 12', 14'. The connecting strut 16' further comprises two outer portions AA1, AA2, which each extend outwards from the longitudinal struts 12', 14' and in a part adjoining the longitudinal struts 12', 14' initially form an extension of the middle portion MA of the connecting strut 16' but are then curved through an angle of ca. 90° and extend substantially parallel to the longitudinal struts 12', 14'. The connecting strut 16' of the frame element 10' is therefore of a substantially C-shaped design.

Like the frame element 10, the frame element 10' also comprises a fastening device, which is not shown in Figure 7 and is used to fasten an aircraft interior component to the frame element 10'. There is moreover a further fastening device, which is not shown in Figure 7, for the mechanically detachable fastening of an insulation pack, which forms part of an aircraft secondary insulation, to the frame element 10'.

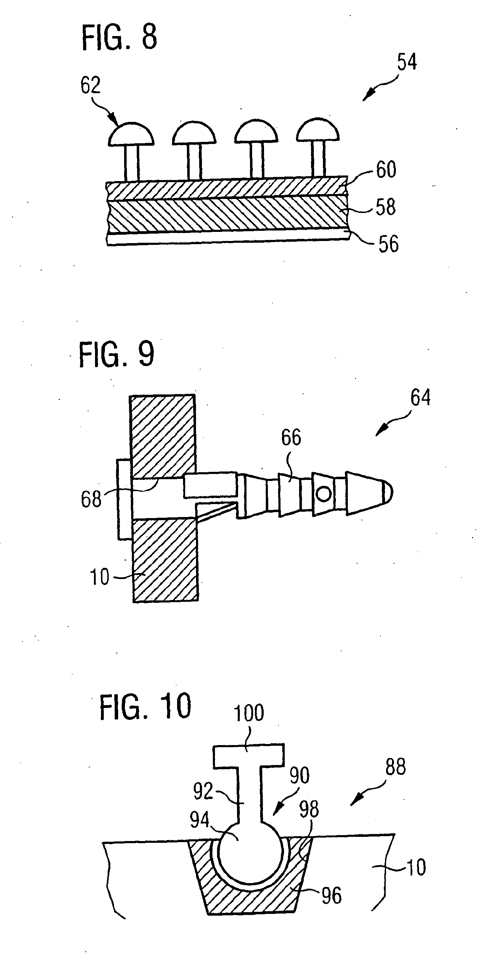

Figures 8 to 10 show various embodiments of a further fastening device for fastening the insulation pack 52 to a frame element 10, 10'.

In Figure 8 the further fastening device is designed in the form of a mushroom-head strip 54, which comprises a protective paper layer 56, a self-adhesive neoprene foam layer 58 disposed on top of the protective paper layer 56, and a polyolefin layer 60 disposed on top of the neoprene foam layer 58. A plurality of mushroom-head devices 62 extend in a substantially vertical direction from the polyolefin layer 60. To fasten the mushroom-head strip 54 to the frame element 10, 10' the protective paper layer 56 is removed to allow the mushroom-head strip 54 to be affixed to the frame element 10 by means of the self-adhesive neoprene foam layer 58. The insulation pack 52 may finally be fastened in a mechanically detachable manner to the frame element 10, 10' by virtue of the mushroom-head devices 62 latching in the insulation material of the insulation pack 52.

Figure 9 shows a further fastening device designed in the form of a fir-tree fastening device 64. The fir-tree fastening device 64 comprises a plurality of fir-tree devices 66, which are received in bores 68 formed in the frame element 10 and extend in a substantially vertical direction from the frame element 10, 10'. The insulation pack 52 may be fastened in a mechanically detachable manner to the frame element 10, 10' by virtue of the fir-tree devices 66 latching in the insulation material of the insulation pack 52.

A further fastening device, which is not shown in the drawings and is designed in the form of an expanding fastening device, comprises a plurality of retaining knobs, which each comprise a head as well as a base extending from the head. The base of the retaining knobs is adapted to be received in a recess formed in the frame element 10, 10'. To fasten a retaining knob to the frame element 10, the base of the retaining knob is introduced into the recess formed in the frame element 10, 10'. Then the retaining knob is rotated in increments of 15° until projections formed on the base interact with complementary devices, which are provided in the recess formed in the frame element 10, 10'. Finally, a locking cylinder disposed on the head of the retaining knob is pressed downwards until it interacts with a locking pin disposed in the interior of the head. The insulation pack 52 may finally be fastened to the frame element 10, 10' with the aid of screws, which interact with threads formed in the heads of the retaining knobs.

Figure 10 finally shows a further fastening device designed in the form of a ball fastening device 88. The ball fastening device 88 comprises a plurality of ball mountings 90 each comprising a cylindrical bolt 92. Disposed on one end of the bolt 92 is a ball 94 that is arranged so as to be received in a recess 98, which is formed in the frame element 10, 10' and lined with a rubber insert 96. To fasten the insulation pack 52 to the frame element 10, 10', the insulation material of the insulation pack 52 is clamped between a mounting 100, which is formed on an opposite end of the bolt 92, and the surface of the frame element 10, 10'.

During assembly of the frame element 10, 10', first a desired interior component 34 is fastened to the frame element 10, 10'. Then an insulation pack 52 forming part of an aircraft secondary insulation is attached in a mechanically detachable manner to the frame element 10, 10'.

The assembly group consisting of at least one interior component 34, at least one frame element 10, 10' and at least one insulation pack 52 is then screw-fastened to the aircraft structure 36. For the acoustic uncoupling of the assembly group consisting of the interior component 34, the frame element 10, 10' and the insulation pack 52 from the aircraft structure 36, the fastening is effected via shock mounts.

## Claims

1. Arrangement comprising:
- an aircraft structure (36) comprising a rib (42,44), and
- a frame element (10; 10') for use in an aircraft mponent assembly system (46), wherein the frame element (10; 10') is attached to the aircraft structure (36) and comprises at least one fastening device for fastening at least one aircraft interior component (34) or at least one insulation pack (52) to the frame element (10; 10'), two longitudinal struts (12, 14; 12', 14') disposed at least in sections substantially parallel to one another and at least one connecting strut (16, 18; 16') extending at least in sections between the longitudinal struts (12, 14; 12', 14'),
**characterized in that** the connecting strut (16, 18) of the frame element (10) is provided with at least one recess (26, 28, 30, 32), which receives the rib (42, 44) of the aircraft structure (36).

2. Arrangement according to claim 1, **characterized in that** the at least one fastening device for fastening the at least one aircraft interior component (34) to the frame element (10; 10') is designed in the form of a mounting, a clamp or a detent device.

3. Arrangement according to claim 1, **characterized in that** the at least one fastening device for fastening the at least one insulation pack (52) to the frame element (10; 10') is adapted to fasten an insulation pack (52) in a mechanically detachable manner to the frame element (10; 10').

4. Arrangement according to one of claims 1 to 3, **characterized in that** on each longitudinal strut (12, 14) of the frame element (10) at least one force introduction apparatus (20, 22) is formed for attaching the frame element (10) to the aircraft structure (36).

5. Arrangement according to one of claims 1 to 4, **characterized in that** the frame element (10; 10') is attached to the aircraft structure (36) via shock mounts.

6. Arrangement according to one of claims 1 to 5, **characterized in that** the frame element (10) comprises a fastening module (50), on which the at least one fastening device for fastening at least one aircraft interior component (34) is formed or disposed.

7. Arrangement according to one of claims 1 to 6, **characterized in that** the frame element (10; 10') further comprises at least one further fastening device for fastening at least one insulation pack (52) or at least one interior component (34) to the frame element (10; 10').

8. Arrangement according to one of claims 1 to 7, **characterized by** a plurality of frame elements (10; 10').

9. Arrangement according to claim 8, **characterized in that** between adjacent frame elements (10) a gap cover (48) is provided.

10. Method of fitting a component (34, 52) in an aircraft comprising the steps:
- providing a frame element (10; 10'), which is attachable to an aircraft structure (36) and comprises at least one fastening device for fastening at least one aircraft interior component (34) or at least one insulation pack (52) to the frame element, two longitudinal struts (12, 14; 12', 14') disposed at least in sections substantially parallel to one another and at least one connecting strut (16, 18; 16') extending at least in sections between the longitudinal struts (12, 14; 12', 14'),
- fastening at least one interior component (34) or at least one insulation pack (52) to the frame element (10; 10') and
- attaching the frame element (10; 10') having the at least one interior component (34) or the at least one insulation pack (52) fastened thereto to the aircraft structure (36), wherein the frame element (10) having the at least one interior component (34) or the at least one insulation pack (52) fastened thereto is attached in such a way to the aircraft structure (36) that a recess (26, 28, 30, 32) provided in the connecting strut (16, 18) of the frame element (10) receives a rib (42, 44) of the aircraft structure (36).

11. Method according to claim 10, **characterized in that** the at least one interior component (34) is fastened to the frame element (10; 10') by means of a fastening device designed in the form of a mounting, a clamp or a detent device.

12. Method according to claim 10, **characterized in that** the at least one insulation pack (52) is fastened to the frame element (10; 10') by means of a fastening device that is adapted to fasten the insulation pack (52) in a mechanically detachable manner to the frame element (10; 10')

13. Method according to one of claims 10 to 12, **characterized in that** the frame element (10) having the at least one interior component (34) or the at least one insulation pack (52) fastened thereto is attached to the aircraft structure (36) by means of a force introduction apparatus (20, 22) that is formed on each longitudinal strut (12, 14) of the frame element (10).

14. Method according to one of claims 10 to 13, **characterized in that** the frame element (10; 10') having the at least one interior component (34) or the at least one insulation pack (52) fastened thereto is attached to the aircraft structure (36) via shock mounts.

15. Method according to one of claims 10 to 14, **characterized in that** the at least one interior component (34) is fastened to the frame element (10) by means of a fastening device that is formed or disposed on a fastening module (50), which is provided on the frame element (10).

16. Method according to one of claims 10 to 15, **characterized in that** at least one interior component (34) and at least one insulation pack (52) are fastened to the frame element (10).

## Patentansprüche

1. Anordnung mit:
- einer Flugzeugstruktur (36), die einen Spant (42, 44) umfasst, und
- einem Rahmenelement (10; 10') zur Verwendung in einem Flugzeugkomponentenmontagesystem (46), wobei das Rahmenelement (10; 10') an der Flugzeugstruktur (36) angebracht ist und mindestens eine Befestigungseinrichtung zur Befestigung mindestens einer Flugzeuginterieurkomponente (34) oder mindestens eines Isolationspakets (52) an dem Rahmenelement (10; 10'), zwei zumindest abschnittsweise im Wesentlichen parallel zueinander angeordnete Längsstreben (12, 14; 12', 14') sowie mindestens eine sich zumindest abschnittsweise zwischen den Längsstreben (12, 14; 12', 14') erstreckende Verbindungsstrebe (16, 18; 16'), umfasst
**dadurch gekennzeichnet, dass** die Verbindungsstrebe (16, 18) des Rahmenelements (10) mit mindestens einer Ausnehmung (26, 28, 30, 32) versehen ist, die den Spant (42, 44) der Flugzeugstruktur (36) aufnimmt.

2. Anordnung nach Anspruch 1, **dadurch gekennzeichnet, dass** die mindestens eine Befestigungseinrichtung zur Befestigung der mindestens einen Flugzeuginterieurkomponente (34) an dem Rahmenelement (10; 10') in Form einer Halterung, einer Klemme oder einer Rastvorrichtung ausgebildet ist.

3. Anordnung nach Anspruch 1, **dadurch gekennzeichnet, dass** die mindestens eine Befestigungseinrichtung zur Befestigung des mindestens einen Isolationspakets (52) an dem Rahmenelement (10; 10') dazu eingerichtet ist, ein Isolationspaket (52) mechanisch lösbar an dem Rahmenelement (10; 10') zu befestigen.

4. Anordnung nach einem der Ansprüche 1 bis 3, **dadurch gekennzeichnet, dass** an jeder Längsstrebe (12, 14) des Rahmenelements (10) mindestens eine Krafteinleitungsvorrichtung (20, 22) zum Anbringen des Rahmenelements (10) an der Flugzeugstruktur (36) ausgebildet ist.

5. Anordnung nach einem der Ansprüche 1 bis 4, **dadurch gekennzeichnet, dass** das Rahmenelement (10; 10') über Shock Mounts an der Flugzeugstruktur (36) angebracht ist.

6. Anordnung nach einem der Ansprüche 1 bis 5, **dadurch gekennzeichnet, dass** das Rahmenelement (10) ein Befestigungsmodul (50) umfasst, an dem die mindestens eine Befestigungseinrichtung zur Befestigung mindestens einer Flugzeuginterieurkomponente (34) ausgebildet oder angeordnet ist.

7. Anordnung nach einem der Ansprüche 1 bis 6, **dadurch gekennzeichnet, dass** das Rahmenelement (10; 10') ferner mindestens eine weitere Befestigungseinrichtung zur Befestigung mindestens eines Isolationspakets (52) oder mindestens einer Interieurkomponente (34) an dem Rahmenelement (10; 10') aufweist.

8. Anordnung nach einem der Ansprüche 1 bis 7, **gekennzeichnet durch** eine Mehrzahl von Rahmenelementen (10; 10').

9. Anordnung nach Anspruch 9, **dadurch gekennzeichnet, dass** zwischen benachbarten Rahmenelementen (10) jeweils eine Spaltabdeckung (48) vorgesehen ist.

10. Verfahren zur Montage einer Komponente (34, 52) in einem Flugzeug mit den Schritten:
- Bereitstellen eines Rahmenelements (10; 10'), das an einer Flugzeugstruktur (36) anbringbar ist und mindestens eine Befestigungseinrichtung zur Befestigung mindestens einer Flugzeuginterieurkomponente (34) oder mindestens eines Isolationspakets (52) an dem Rahmenelement, zwei zumindest abschnittsweise im Wesentlichen parallel zueinander angeordnete Längsstreben (12, 14; 12', 14') sowie mindestens eine sich zumindest abschnittsweise zwischen den Längsstreben (12, 14; 12', 14') erstreckende Verbindungsstrebe umfasst,
- Befestigen mindestens einer Interieurkomponente (34) oder mindestens eines Isolationspakets (52) an dem Rahmenelement (10; 10') und
- Anbringen des Rahmenelements (10; 10') mit der daran befestigten mindestens einen Interieurkomponente (34) oder dem daran befestigten mindestens einen Isolationspaket (52) an der Flugzeugstruktur (36), wobei das Rahmenelement (10) mit der daran befestigten mindestens einen Interieurkomponente (34) oder dem daran befestigten mindestens einen Isolationspaket (52) derart an der Flugzeugstruktur (36) angebracht wird, dass eine in der Verbindungsstrebe (16, 18) des Rahmenelements (10) vorgesehene Ausnehmung (26, 28, 30, 32) einen Spant (42, 44) der Flugzeugstruktur (36) aufnimmt.

11. Verfahren nach Anspruch 10, **dadurch gekennzeichnet, dass** die mindestens eine Interieurkomponente (34) mittels einer in Form einer Halterung, einer Klemme oder einer Rastvorrichtung ausgebildeten Befestigungsvorrichtung an dem Rahmenelement (10; 10') befestigt wird.

12. Verfahren nach Anspruch 10, **dadurch gekennzeichnet, dass** das mindestens eine Isolationspaket (52) mittels einer Befestigungsvorrichtung an dem Rahmenelement (10; 10') befestigt wird, die dazu eingerichtet ist, das Isolationspaket (52) mechanisch lösbar an dem Rahmenelement (10; 10') zu befestigen.

13. Verfahren nach einem der Ansprüche 10 bis 12, **dadurch gekennzeichnet, dass** das Rahmenelement (10) mit der daran befestigten mindestens einen Interieurkomponente (34) oder dem daran befestigten mindestens einen Isolationspaket (52) mittels einer an jeder Längsstrebe (12, 14) des Rahmenelements (10) ausgebildeten Krafteinleitungsvorrichtung (20, 22) an der Flugzeugstruktur (36) angebracht wird.

14. Verfahren nach einem der Ansprüche 10 bis 13, **dadurch gekennzeichnet, dass** das Rahmenelement (10; 10') mit der daran befestigten mindestens einen Interieurkomponente (34) oder dem daran befestigten mindestens einen Isolationspaket (52) über Shock Mounts an der Flugzeugstruktur (36) angebracht wird.

15. Verfahren nach einem der Ansprüche 10 bis 14, **dadurch gekennzeichnet, dass** die mindestens eine Interieurkomponente (34) mittels einer Befestigungsvorrichtung an dem Rahmenelement (10) befestigt wird, die an einem an dem Rahmenelement (10) vorgesehenen Befestigungsmodul (50) ausgebildet oder angeordnet ist.

16. Verfahren nach einem der Ansprüche 10 bis 15, **dadurch gekennzeichnet, dass** mindestens eine Interieurkomponente (34) und mindestens ein Isolationspaket (52) an dem Rahmenelement (10) befestigt werden.

## Revendications

1. Agencement, comprenant :
- une structure d'aéronef (36) comprenant une nervure (42, 44), et
- un élément de châssis (10 ; 10') destiné à une utilisation dans un système d'assemblage de composants d'aéronef (46), dans lequel l'élément de châssis (10 ; 10') est fixé à la structure d'aéronef (36) et comprend au moins un dispositif de fixation pour fixer au moins un composant intérieur d'aéronef (34) ou au moins une garniture d'isolation (52) à l'élément de châssis (10 ; 10'), deux montants longitudinaux (12, 14 ; 12' ; 14') disposés au moins en sections substantiellement parallèles l'une à l'autre et au moins un montant de connexion (16, 18 ; 16') s'étendant au moins en sections entre les montants longitudinaux (12, 14 ; 12' ; 14'), **caractérisé en ce que** le montant de connexion (16, 18) de l'élément de châssis (10) est prévu avec au moins un renfoncement (26, 28, 30, 32) qui reçoit la nervure (42, 44) de la structure d'aéronef (36).

2. Agencement selon la revendication 1, **caractérisé en ce que** l'au moins un dispositif de fixation pour fixer l'au moins un composant intérieur d'aéronef (34) à l'élément de châssis (10 ; 10') est conçu sous la forme d'un dispositif de montage, de pince ou de cran.

3. Agencement selon la revendication 1, **caractérisé en ce que** l'au moins un dispositif de fixation pour fixer l'au moins une garniture d'isolation (52) à l'élément de châssis (10 ; 10') est adapté à fixer une garniture d'isolation (52) d'une manière mécaniquement détachable à l'élément de châssis (10 ; 10').

4. Agencement selon l'une des revendications 1 à 3, **caractérisé en ce que** sur chaque montant longitudinal (12, 14) de l'élément de châssis (10), au moins un appareil d'introduction en force (20, 22) est formé pour fixer l'élément de châssis (10) à la structure d'aéronef (36).

5. Agencement selon l'une des revendications 1 à 4, **caractérisé en ce que** l'élément de châssis (10 ; 10') est fixé à la structure d'aéronef (36) par l'intermédiaire de supports antivibratoires.

6. Agencement selon l'une des revendications 1 à 5, **caractérisé en ce que** l'élément de châssis (10) comprend un module de fixation (50), sur lequel l'au moins un dispositif de fixation pour fixer au moins un composant intérieur d'aéronef (34) est formé ou disposé.

7. Agencement selon l'une des revendications 1 à 6, **caractérisé en ce que** l'élément de châssis (10 ; 10') comprend en outre au moins un autre dispositif de fixation pour fixer au moins une garniture d'isolation (52) ou au moins un composant intérieur (34) à l'élément de châssis (10 ; 10').

8. Agencement selon l'une des revendications 1 à 7, **caractérisé par** une pluralité d'éléments de châssis (10 ; 10').

9. Agencement selon la revendication 8, **caractérisé en ce qu'**entre éléments de châssis (10) adjacents, un couvre-espace (48) est prévu.

10. Procédé de mise en place d'un composant (34, 52) dans un aéronef comprenant les étapes :
- de prévision d'un élément de châssis (10 ; 10'), qui peut être fixé à une structure d'aéronef (36) et comprend au moins un dispositif de fixation pour fixer au moins un composant intérieur d'aéronef (34) ou au moins une garniture d'isolation (52) à l'élément de châssis, deux montants longitudinaux (12, 14 ; 12' ; 14') disposés au moins en sections substantiellement parallèles l'une à l'autre et au moins un montant de connexion (16, 18 ; 16') s'étendant au moins en sections entre les montants longitudinaux (12, 14 ; 12' ; 14'),
- de fixation d'au moins un composant intérieur (34) ou d'au moins une garniture d'isolation (52) à l'élément de châssis (10 ; 10') et
- de fixation de l'élément de châssis (10 ; 10') ayant l'au moins un composant intérieur (34) ou l'au moins une garniture d'isolation (52) fixé(e) à celui-ci à une structure d'aéronef (36), dans lequel l'élément de châssis (10) ayant l'au moins un composant intérieur (34) ou l'au moins une garniture d'isolation (52) fixé(e) à celui-ci est fixé à la structure d'aéronef (36) de telle façon qu'un renfoncement (26, 28, 30, 32) prévu dans le montant de connexion (16, 18) de l'élément de châssis (10) reçoit une nervure (42, 44) de la structure d'aéronef (36).

11. Procédé selon la revendication 10, **caractérisé en ce que** l'au moins un composant intérieur (34) est fixé à l'élément de châssis (10 ; 10') au moyen d'un dispositif de fixation conçu sous la forme d'un dispositif de montage, de pince ou de cran.

12. Procédé selon la revendication 10, **caractérisé en ce que** l'au moins une garniture d'isolation (52) est fixée à l'élément de châssis (10 ; 10') au moyen d'un dispositif de fixation qui est adapté à fixer la garniture d'isolation (52) d'une manière mécaniquement détachable à l'élément de châssis (10 ; 10').

13. Procédé selon l'une des revendications 10 à 12, **caractérisé en ce que** l'élément de châssis (10) ayant l'au moins un composant intérieur (34) ou l'au moins une garniture d'isolation (52) fixé(e) à celui-ci est fixé à la structure d'aéronef (36) au moyen d'un appareil d'introduction en force (20, 22) qui est formé sur chaque montant longitudinal (12, 14) de l'élément de châssis (10).

14. Procédé selon l'une des revendications 10 à 13, **caractérisé en ce que** l'élément de châssis (10 ; 10') ayant l'au moins un composant intérieur (34) ou l'au moins une garniture d'isolation (52) fixé(e) à celui-ci est fixé à la structure d'aéronef (36) par l'intermédiaire de supports antivibratoires.

15. Procédé selon l'une des revendications 10 à 14, **caractérisé en ce que** l'au moins un composant intérieur (34) est fixé à l'élément de châssis (10) au moyen d'un dispositif de fixation qui est formé ou disposé sur un module de fixation (50), qui est prévu sur l'élément de châssis (10).

16. Procédé selon l'une des revendications 10 à 15, **caractérisé en ce qu'**au moins un composant intérieur (34) et au moins une garniture d'isolation (52) sont fixés à l'élément de châssis (10).
